# EUROPEAN PATENT APPLICATION

(11) **EP 2 639 331 A2**
(43) Date of publication of application: **18.09.2013**
(21) Application number: 13159800.5
(22) Date of filing: 18.03.2013
(51) Int. Cl.: C23C 18/12, C07F 7/08, C07F 7/12, C07F 7/18

(54) **Catalyst synthesis for organosilane sol-gel reactions**

(30) Priority: 16.03.2012 US 201261611808 P; 12.03.2013 US 201313795636
(71) Applicant: AIR PRODUCTS AND CHEMICALS, INC., Allentown, PA 18195-1501 (US)
(72) Inventor: Xiao, Manchao, San Diego, CA California 92130 (US); Pearlstein, Ronald Martin, San Marcos, CA California 92078 (US); Derecskei-Kovacs, Agnes, Macungie, PA Pennsylvania 18062 (US); Lei, Xinjian, Vista, CA California 92081 (US); Ho, Richard, Anaheim, CA California 92807 (US); O'Neill, Mark Leonard, San Marcos, CA California 92078 (US); Spence, Daniel P., Carlsbad, CA California 92008 (US); Mayorga, Steven Gerard, Oceanside, CA California 92056 (US)
(74) Representative: Muir, Benjamin M. J.

(57) **Abstract**

A formulation comprising a first organosilane precursor, optionally a halogenation reagent, and a second organosilane precursor are described. At least a portion or all of the halogenation reagent may react with the first organosilane precursor to provide the second organosilane precursor. Methods of generating such formulation in situ from readily available pure materials are also provided. Further provided are methods of using the formulations as the precursor for a flowable vapor deposition process.

## Description

### BACKGROUND OF THE INVENTION

Described herein is a process for the fabrication of an electronic device. More specifically, described herein are catalyst compounds, and pre-mixtures, mixtures, and formulations comprising same, that are used for a hydrolyzable organosilane precursors' self-catalyzing reaction in a semiconductor deposition process, such as without limitation, in a flowable chemical vapor deposition of silicon oxide.

Alkoxysilane compounds are useful as precursors for silicon-containing films (such as silicon oxide films) deposited by controlled hydrolysis and condensation reactions. Such films can be deposited onto a substrate, for example, by applying a mixture of water and alkoxysilanes, optionally with solvent and/or other additives such as surfactants and porogens, onto a substrate. Typical methods for the application of these mixtures include, without limitation, spin coating, dip coating, spray coating, screen printing, co-condensation, and ink jet printing. After application to the substrate and upon application of one or more energy sources such as, without limitation thermal, plasma, and/or other sources, the water within the mixture can react with the alkoxysilanes to hydrolyze the alkoxide and/or aryloxide groups and generate silanol species, which further condense with other hydrolyzed molecules and form an oligomeric or network structure.

Vapor deposition processes using water and a silicon containing vapor source for flowable dielectric deposition have been described, for instance, in US Pat. Nos. 7,498,273; 7,074,690; 7,582,555; 7,888,233; and 7,915,131. Since the Si-C bond is relatively inert towards reaction with water, the resultant network may be beneficially functionalized with organic functional groups which impart desired chemical and physical properties to the resultant film. For example, the addition of carbon to the network may lower the dielectric constant of the resultant film.

Unfortunately, under certain deposition conditions, the hydrolysis and condensation reactions described above do not occur at a sufficiently fast rate to enable practical application of such precursors.

It is well known that acids (aqueous hydrochloric or aqueous nitric acids for example) and bases (aqueous ammonium hydroxide, for example) can catalyze the hydrolysis and condensation of organosilane components in the so-called sol-gel process. The use of acidic and basic catalysts can accelerate the hydrolysis and condensation of silicate networks in 'sol-gel' processes. These aqueous catalysts, however, cannot be stored for an indefinite time as an admixture with the organosilane precursors due to chemical reactivity. In addition, when supplied in a separate feed stream during chemical vapor deposition, the catalyst and precursor may not be intimately mixed and could become spatially segregated on the substrate leading to inhomogeneous deposition rates.

Halosilanes have been disclosed as catalysts or as pre-catalyst precursors for flowable silicon dielectric chemical vapor deposition processes. US Pat. No. 7,629,227 ("US '227) teaches a method for forming a flowable dielectric film that which involves a silicon-containing precursor and a catalyst selected from an ionizable species or a halosilane of formula R₃SiX where R is independently selected from H, C₁-C₅ alkoxy and X is a halogen, amine or phosphine (see US '227 at col. 6, lines 32-54). Examples of catalyst compounds include: (CH₃O)₃SiCl, (CH₃CH₂O)₃SiCl, (CH₃O)₂Si(H)Cl, (CH₃CH₂O)₂Si(H)Cl and (CH₃)₃SiN(H)Si(CH₃)₃ (id.). These Si- containing catalyst compounds may also provide at least some of the silicon that reacts to form the flowable film and/or be mixed with the silicon-containing precursor (*id*.). The US '227 patent also teaches an embodiment wherein a trimethoxysilane ((CH₃O)₃SiH) precursor with a certain percentage of Cl impurity (in the form of (CH₃O)₂Si(H)Cl) is used (*id*.). The US '227 patent further teaches that its silicon-containing catalyst compound is not limited to use with its analogous non-halogenated form but may also be used with another silicon-containing precursor (e.g., (CH₃O)₃SiCl may be the catalyst compound and TEOS the precursor) (*id*.).

The reference entitled "Some Characteristics of Silylating Aminophenols " Narkon, A. L., et al. in Izv. Akad. Nauk. SSSR, Ser. Khim. 1979, 1090-3 describes the reaction o-Me₃SiOC₆H₄NH2 with BzCl (benzoyl chloride) which gave o-HOC₆H₄NHBz and Me₃SiCl. The generality of this reaction to other, non-functionalized or saturated silicate esters is not described.

The reference entitled "Cleavage of Silicon-Nitrogen Bonds by Acid Chlorides: An Unusual Synthetic Route to Amides," Bowser, J. R., et al., J. Org. Chem., Vol. 48, (1983), pg. 4111-13, describes the reaction of aminosilanes with acyl halides to form a Si-Cl bond and an amide.

The reference entitled "Reactions of Silamorpholinones and Acylsilmorpholines with Electrophilic Reagents. X-ray Structure of Products Including a Pentacoordinated Silicon Compound", Shipov, A. G. et al, J. Organomet. Chem., Vol. 620 (2001), pp. 139-49 describe the reaction with silamorpholines (where there is an endocyclic Si-O bond) with acyl halides causes the ring opening to form a Si-halogen bond and the corresponding ester group.

U.S. Pat. No. 6,235,920 ("US '920") describes a method for preparing a functional halosilane by reacting cyclic silyl ether and a halogen-functional compound.

U.S. Publ. No. 2010/0164057 ("the '057 Publ.") discloses a full fill trench structure comprising a microelectronic device substrate having a high aspect ratio trench therein and a full filled mass of silicon dioxide in the trench, wherein the silicon dioxide is of a substantially void-free character and has a substantially uniform density throughout its bulk mass. A corresponding method of manufacturing a semiconductor product is described, involving use of specific silicon precursor compositions for use in full filling a trench of a microelectronic device substrate, in which the silicon dioxide precursor composition is processed to conduct hydrolysis and condensation reactions for forming the substantially void free and substantially uniform density silicon dioxide material in the trench. The fill process may be carried out with a precursor fill composition including silicon and germanium, to produce a microelectronic device structure including a Ge0₂/SiO₂ trench fill material. A suppressor component, e.g. ,methanol, may be employed in the precursor fill composition, to eliminate or minimize seam formation in the cured trench fill material.

GB Pat. No. 653238 ("GB '238") teaches a process for interchanging the alkoxy and chlorine substituents of silanes to form silanes having both chlorine and alkoxy substituents on the same silicon atom. GB '238 teaches that the alkoxy chlorosilane reaction products may contain functionally inert monovalent alkyl or aryl radicals attached to the silicon atom through a carbon linkage in addition to the alkoxy and chlorine substituents (e.g., (CH₃)₂Si(OC₂H₅)Cl, C₆H₅CH₃Si(OCH₃)Cl, (C₂H₅)₂Si(OC₂H₅)Cl, and CH₃Si(OC₂H₅)₂Cl) and silanes containing only alkoxy and chlorine substituents (e.g., (C₂H₅O)₂SiCl₂, (CH₃O₂)SiCl₂, and (C₂H₅O)₃SiCl) (see GB' 238 on pg. 1, line 100 and pg. 2 lines 73-90). After separation of the reaction products, which is accomplished by fractional distillation, the alkoxy chlorosilanes may be condensed, without first being hydrolyzed, to form siloxanes (*id*.). Example 5 of GB '238 teaches the reaction of a mixture containing equimolar amounts of CH₃Si(OC₂H₅) and CH₃SiCl₃ in the presence of HCl (which was contained in CH₃SiCl₃ as an impurity). After heating the mixture to 70 °C, the mixture reacted to form CH₃Si(OEt₂)Cl₂ and CH₃SiCl₂OEt, which was 96.7% of theoretical.

Some halosilanes that may otherwise be desirable as catalyst precursors in dilute mixtures with silicon-containing precursors for deposition of silicon-containing films are not readily available because they are difficult to isolate in pure form or because they degrade when stored in an undiluted state due to intermolecular self-reaction. As a result, it is desirable to make catalytically active species in situ in a matrix of the main deposition component. Most desirably, the main deposition component may also serve as a reagent for the in situ synthesis of the catalyst.

### BRIEF SUMMARY OF THE INVENTION

Described herein is a stable mixture or formulation, which can be a pre-mixture, a preliminary formulation, or a formulation containing a first organosilane precursor, preferably present in bulk (e.g., an amount of 50% by weight or greater of the overall formulation), and a halogenation reagent wherein at least a portion of the first organosilane precursor reacts in situ with the halogenation reagent to form a second organosilane precursor. The second organosilane precursor may then act as a pre-catalyst additive that releases catalytically active species upon exposure to a protic reactant, such as water or water vapor in a semiconductor deposition process, such as, without limitation, a flowable deposition process. The formulations described herein may be used in a process to deposit a dielectric film by using techniques known in the art. The formulations can be pre-mixed mixtures, or pre-mixtures (mixed before being used in the deposition process), or in-situ mixtures (mixed during the deposition process). Thus, in this disclosure the terms "mixture" and "formulation" are interchangeable.

According to one aspect of the invention there is provided a formulation comprising:
(a) a first organosilane precursor having a formula I comprising:

   I. R¹R²R³R⁴Si

   wherein R¹, R², R³, and R⁴ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; an amino group having the formula NR⁵R⁶ wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring; and an alkoxysilylalkyl group having a formula selected from the group consisting of -CH₂Si(OR⁷)ₙR⁸₃₋ₙ and -CH₂CH₂Si(OR⁷)ₙR⁸ ₃₋ₙ wherein R⁷ and R³ are independently chosen from: a hydrogen atom, a C₁-C₆ a linear or branched alkyl group, a C₃ to C₁₂ cycloalkyl group, and a C₃ to C₁₂ aryl group wherein R⁷ and R³ are connected to form a ring or R⁷ and R⁸ are not connected to form a ring and wherein in the alkoxysilylalkyl group n is a number ranging from 0 to 3; and wherein the first organosilane precursor contains at least two hydrolysable bonds independently selected from the group consisting of Si-H, Si-halogen, Si-O and Si-N bond;
(b) optionally a halogenation reagent having a formula II comprising:

   II. R⁹C(O)X

   wherein X is a halogen atom and R⁹ is selected from the group consisting of a hydrogen atom; a C₁-C₁₂ linear or branched alkyl group; a C₃-C₁₂ aryl group; a C₃-C₁₂ cycloalkyl group; a C₁-C₁₂ linear or branched acyl group; a C₅-C₁₂ aroyl group; and a C₁-C₁₂ linear or branched acyl halide group;
(c) a second organosilane precursor selected from the group consisting of:
   (1) a compound having a formula III comprising:

      III. XSiR¹R²R³

      wherein X is a halogen atom selected from the group consisting of F, Cl, Br, and I; and R¹, R², and R³ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; and an alkoxysilylalkyl group having a formula selected from the group consisting of -CH₂Si(OR⁷)ₙR⁸₃₋ₙ and -CH₂CH₂Si(OR⁷) ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3 and wherein at least one of substituents R¹, R², and R³ within the second organosilane precursor forms a Si-H, Si-halogen, Si-O or Si-N bond;
      and
   (2) a compound having a formula IV comprising:

      IV. (R⁵R⁶N)ₙSiH₄₋ₙ
wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring and n= 1, 2, 3, or 4. In preferred embodiments the first organosilane precursor reacts with at least a portion or all of the halogenation reagent to provide the second organosilane precursor.

In one embodiment of the formulation described herein, the formulation comprises: the first organosilane precursor having formula I, the halogenation reagent having formula II, and the second organosilane precursor having formula III. In an alternative embodiment of the formulation described herein, the formulation comprises: the first organosilane precursor having formula I, the halogenation reagent having formula II, and the second organosilane precursor having formula IV. In either or both embodiments, the formulation comprises the halogenation reagent or alternatively does not comprise the halogenation reagent. In either or both embodiments, the formulation may further comprise an inert by-product.

Another aspect of the present invention is method of generating such formulation in situ from readily available pure materials.

In a further apsect of the invention there is provided a vessel containing a formulation, the formulation comprising:
(a) a first organosilane precursor having a formula I comprising:

   I. R¹R²R³R⁴Si

   wherein R¹, R², R³, and R⁴ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; an amino group having the formula NR⁵R⁶ wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring; and an alkoxysilylalkyl group having a formula selected from the group consisting of -CH₂Si(OR⁷)ₙR⁸₃₋ₙ and -CH₂CH₂Si(OR⁷)ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3; and wherein the first organosilane precursor contains at least two hydrolysable bonds independently selected from the group consisting of Si-H, Si-halogen, Si-O and Si-N bond;
(b) a halogenation reagent having a formula II comprising:

   II. R⁹C(O)X

   wherein X is a halogen atom and R⁹ is selected from the group consisting of a hydrogen atom; a C₁-C₁₂ linear or branched alkyl group; a C₃-C₁₂ aryl group; a C₃-C₁₂ cycloalkyl group; a C₁-C₁₂ linear or branched acyl group; a C₅-C₁₂ aroyl group; and a C₁-C₁₂ linear or branched acyl halide group;
(c) a second organosilane precursor selected from the group consisting of:
   (1) a compound having a formula III comprising:

      III. XSiR¹R²R³

      wherein X is a halogen atom selected from the group consisting of F, Cl, Br, and I; and R¹, R², and R³ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; and an alkoxysilylalkyl group having a formula selected from the group consisting of -CH₂Si(OR⁷)ₙR⁸₃₋ₙ and -CH₂CH₂Si(OR⁷) ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3 and wherein at least one of substituents R¹, R², and R³ within the second organosilane precursor forms a Si-H, Si-halogen, Si-O or Si-N bond;
      and
   (2) a compound having a formula IV comprising:

      IV. (R⁵R⁶N)ₙSiH₄₋ₙ
wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring and n= 1, 2, 3, or 4. In preferred embodiments the first organosilane precursor reacts with at least a portion or all of the halogenation reagent to provide the second organosilane precursor.

Yet another aspect of the present invention is the method of using the formulations described herein as the precursor for flowable chemical vapor deposition process. The formulation has beneficial properties when used as the precursor for flowable dielectric vapor deposition processes.

More specifically, in yet another aspect, the invention provides a method of depositing a condensed flowable silicon containing film on a substrate, comprising steps of:
providing a substrate in a reactor;
   introducing a formulation comprising:
   (a) a first organosilane precursor having a formula I comprising:

      I. R¹R²R³R⁴Si

      wherein R¹, R², R³, and R⁴ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group N=C=O bonded to the silica; an amino group having the formula NR⁵R⁶ wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring; and an alkoxysilylalkyl group having a formula selected from the group consisting of -CH₂Si(OR⁷)ₙR⁸₃₋ₙ and - CH₂CH₂Si(OR⁷)ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3; and wherein the first organosilane precursor contains at least two hydrolysable bonds selected from the group consisting of Si-H, Si-halogen, Si-O and Si-N bond;
   (b) a halogenation reagent having a formula II comprising:

      II. R⁹C(O)X

      wherein X is a halogen atom and R⁹ is selected from the group consisting of a hydrogen atom; a C₁-C₁₂ linear or branched alkyl group; a C₃-C₁₂ aryl group; a C₃-C₁₂ cycloalkyl group; a C₁-C₁₂ linear or branched acyl group; a C₅-C₁₂ aroyl group; and a C₁-C₁₂ linear or branched acyl halide group;
   (c) a second organosilane precursor selected from the group consisting of:
      (1) a compound having a formula III comprising:

         III. XSiR¹R²R³

         wherein X is a halogen atom selected from the group consisting of F, Cl, Br, and I; and R¹, R², and R³ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; and an alkoxysilylalkyl group having a formula selected from the group consisting of -CH₂Si(OR⁷)ₙR⁸₃₋ₙ and -CH₂CH₂Si(OR⁷) ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3 and wherein at least one of substituents R¹, R², and R³ within the second organosilane precursor forms a Si-H, Si-halogen, Si-O or Si-N bond; and
      (2) a compound having a formula IV comprising:

         IV. (R⁵R⁶N)ₙSiH₄₋ₙ
   wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring and n= 1, 2, 3, or 4 (and wherein it is preferred that at least a portion of the first organosilane precursor reacts with the halogenation reagent to provide the second organosilane precursor);
introducing a protic reactant comprising water; and
exposing the substrate to the formulation and the protic reactant to form the condensed flowable silicon containing film on the substrate.

Preferred aspects of the present invention includes the following aspects, numbered #1 to #25:
#1. A formulation comprising:
   (a) a first organosilane precursor having a formula I comprising:

      I. R¹R²R³R⁴Si

      wherein R¹, R², R³, and R⁴ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; an amino group having the formula NR⁵R⁶ wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring; and an alkoxysilylalkyl group having a formula selected from the group consisting of -CH₂Si(OR⁷)ₙR⁸₃₋ₙ and -CH₂CH₂Si(OR⁷) ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3 and wherein the first organosilane precursor contains at least two hydrolysable bonds selected from the group consisting of Si-H, Si-O and Si-N bond;
   (b) optionally a halogenation reagent having a formula II comprising:

      II. R⁹C(O)X

      wherein X is a halogen atom and R⁹ is selected from the group consisting of a hydrogen atom; a C₁-C₁₂ linear or branched alkyl group; a C₃-C₁₂ aryl group; a C₃-C₁₂ cycloalkyl group; a C₁-C₁₂ linear or branched acyl group; a C₅-C₁₂ aroyl group; and a C₁-C₁₂ linear or branched acyl halide group;
(c) a second organosilane precursor selected from the group consisting of:
   (1) a compound having a formula III comprising:

      III. XSiR¹R²R³

      wherein X is a halogen atom selected from the group consisting of F, Cl, Br, and I; and R¹, R², and R³ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; and an alkoxysilylalkyl group having a formula selected from the group consisting of -CH₂Si(OR⁷)ₙR⁸₃₋ₙ and -CH₂CH₂Si(OR⁷) ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3 and wherein at least one of substituents R¹, R², and R³ within the second organosilane precursor forms a Si-H, Si-halogen, Si-O or Si-N bond; and
   (2) a compound having a formula IV comprising:

      IV. (R⁵R⁶N)ₙSiH₄₋ₙ
   wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring and n= 1, 2, 3, or 4 and wherein at least a portion or all of the halogenation reagent reacts with the first organosilane precursor to provide the second organosilane precursor.
#2. The formulation of Aspect #1, wherein the first organosilane is selected from the group consisting of: methyltrimethoxysilane, methyltriethoxysilane, triethoxysilane, tetraethoxysilane, hexyltrimethoxysilane, isobutyltrimethoxysilane, isobutyltriethoxysilane, hexyltriethoxysilane, tert-butyltrimethoxysilane, tert-butyltriethoxysilane, ethyltrimethoxysilane, ethyltriethoxysilane, and combinations thereof.
#3. The formulation of Aspect #1, wherein the halogenation reagent is a acyl halide selected from the group consisting of: acetyl chloride, acetyl bromide, oxalyl chloride, pivaloyl chloride, propionyl chloride, propionyl bromide, benzoyl chloride, benzoyl bromide, benzoyl fluoride, acetyl fluoride, acetyl iodide, malonyl chloride, chlorobutyryl chloride, formyl chloride, formyl fluoride polymer-bound benzoyl chloride {a.k.a. (chlorocarbonyl)polystyrenel, and combinations thereof.
#4. The formulation of Aspect #1 further comprising a catalytic active species selected from the group consisting of HCl, HBr, HF, HI, sulfonic acids, amines, imines, and combinations thereof.
#5. The formulation of Apsect #1, wherein R⁴ is selected from an alkoxy group or an aryloxy group.
#6. The formulation of Apsect #1, wherein R⁴ is an amino group having the formula - NR⁵R⁶.
#7. The formulation of Aspect #1, wherein the organosilane precursor is triethoxysilane; the halogenation reagent is acetyl chloride (CH₃C(O)Cl); and the pre-catalyst additive is chlorodiethoxysilane.
#8. The formulation of Aspect #1 further comprising an inert by-product.
#9. The formulation of Aspect #8, wherein the inert by-product is selected from the group consisting of ester and amide.
#10. A system comprises; a vessel comprising a formulation, the formulation comprising:
   (a) a first organosilane precursor having a formula I comprising:

      I. R¹R²R³R⁴Si

      wherein R¹, R², R³, and R⁴ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; an amino group having the formula NR⁵R⁶ wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring; and an alkoxysilylalkyl group having a formula selected from the group consisting of -CH₂Si(OR⁷)ₙR⁸₃₋ₙ and -CH₂CH₂Si(OR⁷) ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3 and wherein the first organosilane precursor contains at least two hydrolysable bonds independently selected from the group consisting of Si-H, Si-halogen, Si-O and Si-N bond;
   (b) optionally a halogenation reagent having a formula II comprising:

      II. R⁹C(O)X

      wherein X is a halogen atom and R⁹ is selected from the group consisting of a hydrogen atom; a C₁-C₁₂ linear or branched alkyl group; a C₃-C₁₂ aryl group; a C₃-C₁₂ cycloalkyl group; a C₁-C₁₂ linear or branched acyl group; a C₅-C₁₂ aroyl group; and a C₁-C₁₂ linear or branched acyl halide group;
   (c) a second organosilane precursor selected from the group consisting of:
      (1) a compound having a formula III comprising:

         III. XSiR¹R²R³

         wherein X is a halogen atom selected from the group consisting of F, Cl, Br, and I; and R¹, R², and R³ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; and an alkoxysilylalkyl group having a formula selected from the group consisting of -CH₂Si(OR⁷)ₙR⁸₃₋ₙ and -CH₂CH₂Si(OR⁷) ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3 and wherein at least one of substituents R¹, R², and R³ within the second organosilane precursor forms a Si-H, Si-halogen, Si-O or Si-N bond; and
      (2) a compound having a formula IV comprising:

         IV. (R⁵R⁶N)ₙSiH₄₋ₙ
   wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring and n= 1, 2, 3, or 4 and wherein the first organosilane precursor reacts with at least a portion or all of the halogenation reagent to provide the second organosilane precursor.
#11. The system of Apsect #10, wherein the organosilane precursor is selected from the group consisting of: methyltrimethoxysilane, methyltriethoxysilane, triethoxysilane, tetraethoxysilane, hexyltrimethoxysilane, isobutyltrimethoxysilane, isobutyltriethoxysilane, hexyltriethoxysilane, tert-butyltrimethoxysilane, tert-butyltriethoxysilane, ethyltrimethoxysilane, ethyltriethoxysilane, and combinations thereof.
#12.The system of Aspect #10, wherein the halogenation reagent is a acyl halide selected from the group consisting of: acetyl chloride, acetyl bromide, oxalyl chloride, pivaloyl chloride, propionyl chloride, propionyl bromide, benzoyl chloride, benzoyl bromide, benzoyl fluoride, acetyl fluoride, acetyl iodide, malonyl chloride, chlorobutyryl chloride, formyl chloride, formyl fluoride, polymer-bound benzoyl chloride, and combinations thereof.
#13.The system of Apsect #10, wherein the storage vessel or the delivery vessel further containing a catalytic species selected from the group consisting of: HCl, HBr, HF, HI, sulfonic acids, amines, imines, and combinations thereof.
#14.The system of Apsect #10, wherein R⁴ is either alkoxy or aryloxy (-OR).
#15.The system of Aspect #10, wherein R⁴ is an amino group (-NR⁵R⁶).
#16.The system of Aspect #10, wherein the organosilane precursor is triethoxysilane; the halogenation reagent is acetyl chloride (CH₃C(O)Cl); the pre-catalyst additive is chlorodiethoxysilane.
#17.The system of Aspect #10, wherein the storage vessel or the delivery vessel further containing an inert by-product.
#18.The system of Aspect #17, wherein the inert by-product is selected from ester and amide.
#19.The system of Aspect #10, wherein the storage vessel or the delivery vessel further containing a catalytic active species selected from the group consisting of HCl, HBr, HF, HI sulfonic acids, amines, imines, and combinations thereof.
#20.The system of Aspect #10, wherein energy is applied to the storage vessel or the delivery vessel; wherein the energy is selected from the group consisting of heat, ultrasonic vibration, microwave , ultraviolet, infrared or visible radiation, mechanical agitation, and combinations thereof.
#21.A method of depositing a condensed flowable silicon containing film on a substrate comprising steps of:
   providing a substrate in a reactor;
   introducing into the reactor
   formulation comprising:
      (a) a first organosilane precursor having a formula I comprising:

         I. R¹R²R³R⁴Si

         wherein R¹, R², R³, and R⁴ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; an amino group having the formula NR⁵R⁶ wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring; and an alkoxysilylalkyl group having a formula selected from the group consisting of - CH₂Si(OR⁷)ₙR⁸₃₋ₙ and -CH₂CH₂Si(OR⁷)ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R³ are connected to form a ring or R⁷ and R⁸ are not connected to form a ring and wherein in the alkoxysilylalkyl group n is a number ranging from 0 to 3 and wherein the first organosilane precursor contains at least two hydrolysable bonds selected from the group consisting of Si-H, Si-O and Si-N bond;
      (b) optionally a halogenation reagent having a formula II comprising:

         II. R⁹C(O)X

         wherein X is a halogen atom and R⁹ is selected from the group consisting of a hydrogen atom; a C₁-C₁₂ linear or branched alkyl group; a C₃-C₁₂ aryl group; a C₃-C₁₂ cycloalkyl group; a C₁-C₁₂ linear or branched acyl group; a C₅-C₁₂ aroyl group; and a C₁-C₁₂ linear or branched acyl halide group;
      (c) a second organosilane precursor selected from the group consisting of:
         (1) a compound having a formula III comprising:

            III. XSiR¹_{R}²_{R}³

            wherein X is a halogen atom selected from the group consisting of F, Cl, Br, and I; and R¹, R², and R³ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; and an alkoxysilylalkyl group having a formula selected from the group consisting of - CH₂Si(OR⁷)ₙR⁸₃₋ₙ and -CH₂CH₂Si(OR⁷)ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3 and wherein at least one of substituents R¹, R², and R³ within the second organosilane precursor forms a Si-H, Si-halogen, Si-O or Si-N bond; and
         (2) a compound having a formula IV comprising:

            IV. (R⁵R⁶N)ₙSiH₄₋ₙ
      wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring and n= 1, 2, 3, or 4 and wherein at least a portion or all of the halogenation reagent reacts with the first organosilane precursor to provide the second organosilane precursor.
      introducing a protic reactant;
      and
      exposing the substrate to the formulation and the protic reactant to form the condensed flowable silicon containing film on the substrate.
#22.The method of Aspect #21, wherein the organosilane precursor is selected from the group consisting of: methyltrimethoxysilane, methyltriethoxysilane, triethoxysilane, tetraethoxysilane, hexyltrimethoxysilane, isobutyltrimethoxysilane, isobutyltriethoxysilane, hexyltriethoxysilane, tert-butyltrimethoxysilane, tert-butyltriethoxysilane, ethyltrimethoxysilane, ethyltriethoxysilane, 1,1,1,4,4,4-hexamethoxy-1,4-disilabutane, 1-methyl-1,1,4,4,4-pentamethoxy-1,4-disilabutane, 1,1,1,4,4,4-hexaethoxy-1,4-disilabutane, 1-methyl-1,1,4,4,4-pentaethoxy-1,4-disilabutane, 1,1,1,3,3,3-hexamethoxy-1,3-disilapropane, 1-methyl-1,1,3,3,3-pentamethoxy-1,3-disilapropane, 1,1,1,3,3,3-hexaethoxy-1,3-disilapropane, 1-methyl-1,1,3,3,3-pentaethoxy-1,3-disilapropane, and combinations thereof.
#23.The method of Aspect #21, wherein the halogenation reagent is a acyl halide selected from the group consisting of: acetyl chloride, acetyl bromide, oxalyl chloride, pivaloyl chloride, propionyl chloride, propionyl bromide, benzoyl chloride, benzoyl bromide, benzoyl fluoride, acetyl fluoride, acetyl iodide, malonyl chloride, chlorobutyryl chloride, formyl chloride, formyl fluoride polymer-bound benzoyl chloride (a.k.a. (chlorocarbonyl)polystyrene), and combinations thereof.
#24.The method of Aspect #21, wherein the protic reactant is selected from the group consisting of water, water vapor, hydrogen peroxide, alcohol, primary, secondary amines and combinations thereof.
#25.The method of Aspect #21, wherein the condensed flowable silicon containing film is treated by energy selected from the group consisting of heat, oxygen containing plasmas, hydrogen containing plasmas, argon plasmas, nitrogen plasmas, ultraviolet radiation, infrared radiation, electron beams, ozone, water vapor, nitrogen, helium and combinations thereof.

### DETAILED DESCRIPTION OF THE INVENTION

It is desirable to have a organosilane precursor(s) which is described herein as a second organosilane precursor contained within the formulation and serves as a source for acids or bases upon exposure to a protic reagent in a semiconductor deposition process, thereby making them self-catalyzing. The organosilane precursors, or second organosilane precursors, which are alternatively referred to herein as pre-catalyst additives, may be formed in situ within a formulation by the reaction of a first organosilane precursor and at least a portion or all of a halogenation reagent.

Formation of by-products decreases the purity level of the formulation and changes as small as 1-2% in chemical purity may be considered unacceptable for reliable semiconductor manufacture. The term "stable" as used herein means that the pre-mixture or formulation described herein does not change 0.5 weight (wt)% or greater, 1 wt% or greater, 2 wt% or greater, 5 wt% or greater, or 10 wt% or greater from its initial composition after being stored for a time period of six (6) months or greater, one (1) year or greater, two (2) years or greater or such other time period which is indicative of being shelf stable. For example, the concentration of the first, second, or both first and second organosilane precursors should not compositionally change by more than 10% of its initial percentage based on gas chromatography (GC) or other analytical techniques after storage for 1 year in order to be considered stable as described herein. The first and second organosilane precursors described herein preferably selected to provide a stable formulation by matching the substituents R¹, R², and R³ contained in both organosilane precursors.

Described herein is a formulation comprising: a first organosilane precursor, that preferably is present in an amount of the formulation of 50% or greater and that hydrolyzes more slowly in the absence of said catalytically active species; optionally a halogenation reagent; and a second organosilane precursor (which is also described herein as a pre-catalyst additive). The halogenation reagent in the formulation may convert at least a portion of the first organosilane precursor to provide the second organosilane precursor. The second organosilane precursor in the formulation can then release a catalytically active species (such as, without limitation, an acid species if the second organosilane precursor has formula III or an amine or base species if the second organosilane precursor has formula IV) upon exposure to a protic reactant comprising water, such as, without limitation, water or water vapor in a semiconductor deposition process. In one particular embodiment, the formulation described herein can be then used for depositing silicon dielectric films in conjunction with a protic reactant such as, without limitation water, or water vapor, for flowable vapor deposition processes. Also described herein are methods of generating the formulation.

As described herein, the formulation comprises a first or hydrolysable organosilane precursor, optionally a halogenation reagent (depending upon whether or not it is completely consumed in the reaction with the first organosilane precursor to form the second organosilane precursor), a pre-catalyst additive or second organosilane precursor, optionally catalytically active species, and optionally inert by-products (depending upon whether it remains in the formulation or is removed by distillation or other means). The first or hydrolysable organosilane precursor preferably is present in the formulation an amount of from 50 weight% (wt%) or greater, 60 wt% or greater, 70 wt% or greater, 80 wt% or greater, or 90 wt% or greater. The halogenation reagent when present in the formulation (if it is not completely consumed in the reaction to form the second organosilane precursor) preferably ranges in amount from 0 to 10wt%. The second organosilane precursor preferably is present in the formulation in 10 parts per million by weight (ppm) to 49 wt%, from 50 ppm and 5 wt%, or from 50 ppm to 1 wt% of the second organosilane precursor. In certain embodiments, the formulation may further comprise 5 wt% or less, 3 wt% or less, 1 wt% or less or 100 ppm of catalytic active species which can be separately added and/or generated in situ. Examples of such catalytic active species are ionic species, such as but not limited to hydrohalic acids: HCl, HBr, HF, HI; sulfonic acids, amines, imines, etc. The formulation may further comprise one or more inert by-products which may be present in an amount ranging from 5 ppm by weight to 25 wt%. The one or more inert by-products are formed from the reaction between the first organosilane precursor and the halogenation reagent. The one or more by-products may remain in the formulation or alternatively be removed from the formulation by one of the separation processes described herein. All wt% and ppm amount for each component add up to 100 wt% for the overall formulation.

The hydrolysable organosilane precursor has the following formula I:

I. R¹R²R³R⁴Si.

In formula I, substituents R¹, R², R³, and R⁴ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; an amino group having the formula NR⁵R⁶ wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring; and an alkoxysilylalkyl group having a formula selected from the group consisting of - CH₂Si(OR⁷)ₙR⁸₃₋ₙ and -CH₂CH₂Si(OR⁷)ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3. Further, in the above Formula I, the first organosilane precursor contains at least two hydrolysable bonds selected from the group consisting of Si-H, Si-halogen, Si-O and Si-N bond.

Examples of the first organosilane precursors include, but are not limited to, methyltrimethoxysilane, methyltriethoxysilane, triethoxysilane, tetraethoxysilane, hexyltrimethoxysilane, isobutyltrimethoxysilane, isobutyltriethoxysilane, hexyltriethoxysilane, tert-butyltrimethoxysilane, tert-butyltriethoxysilane, ethyltrimethoxysilane, ethyltriethoxysilane, 1,1,1,4,4,4-hexamethoxy-1,4-disilabutane, 1-methyl-1,1,4,4,4-pentamethoxy-1,4-disilabutane, 1,1,1,4,4,4-hexaethoxy-1,4-disilabutane, 1-methyl-1,1,4,4,4-pentaethoxy-1,4-disilabutane, 1,1,1,3,3,3-hexamethoxy-1,3-disilapropane, 1-methyl-1,1,3,3,3-pentamethoxy-1,3-disilapropane, 1,1,1,3,3,3-hexaethoxy-1,3-disilapropane, 1-methyl-1,1,3,3,3-pentaethoxy-1,3-disilapropane, and combinations thereof.

The formulation may further comprise a halogenation reagent having the following formula II:

II. R⁹C(O)X

In formula II, X is a halogen atom (e.g., F, Cl, Br, or I) and R⁹ is selected from the group consisting of a hydrogen atom; a C₁-C₁₂ linear or branched alkyl group; a C₃-C₁₂ aryl group; a C₃-C₁₂ cycloalkyl group; a C₁-C₁₂ linear or branched acyl group; a C₅-C₁₂ aroyl group; and a C₁-C₁₂ linear or branched acyl halide group(e.g. R⁹ contains a second C(O)X group).

Examples of the halogenation reagent described herein includes, but are not limited to: acetyl chloride, acetyl bromide, oxalyl chloride (R⁹ = -C(O)Cl), pivaloyl chloride, propionyl chloride, propionyl bromide, benzoyl chloride, benzoyl bromide, benzoyl fluoride, acetyl fluoride, acetyl iodide, malonyl chloride, chlorobutyryl chloride, formyl chloride, formyl fluoride and a polymer-bound benzoyl chloride (such as without limitation (chlorocarbonyl)polystyrene).

The formulation further comprises a pre-catalyst additive which is a second organosilane which can have either formula II or formula IV described herein. The first and second organosilane precursors described herein may preferably be selected to provide a stable formulation by matching the substituents R¹, R², and R³ contained in both organosilane precursors. In embodiments wherein the second organosilane comprises a compound having formula III, the catalytically active species that can be generated, for example, during a flowable vapor deposition process may be an acid species such as, for example, a hydrogen halide. In embodiments wherein the second organosilane comprises a compound having formula IV, the catalytically active species that can be generated, for example, during a flowable vapor deposition process may be an a basic species such as, for example, an amine.

In one embodiment, the pre-catalyst additive or second organosilane is a compound having the following formula III.

(III) XSiR¹R²R³

In formula III, substituents R¹, R², and R³ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; and an alkoxysilylalkyl group having a formula selected from the group consisting of -CH₂Si(OR⁷)ₙR⁸₃₋ₙ and -CH₂CH₂Si(OR⁷)ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3. Further, in the above Formula III, the second organosilane precursor contains at least one hydrolysable bond independently selected from the group consisting of Si-H, Si-halogen, Si-O and Si-N bond.

In one embodiment, the pre-catalyst additive or second organosilane is a compound having the following formula IV:

(IV) (R⁵R⁶N)ₙSiH₄₋ₙ

In formula IV, R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring and n= 1, 2, 3, or 4.

Exemplary pre-catalyst additives or second organosilane precursors include, but not limited to, di-iso-propylaminosilane, di-sec-butylaminosilane, bis(diethylamino)silane, bis(ethylmethylamino)silane, bis(tert-butylamino)silane, bis(tert-amylamino)silane tri(dimethylamino)silane, tri(diethylamino)silane, tri(ethylmethylamino)silane, tetra(dimethylamino)silane, and tetra(diethylamino)silane.

In one particular embodiment, the formulation comprises compounds with formulas I, II, and III; In another particular embodiment, the formulation comprises compounds with formulas I and IV.

While not being bound by theory, in one particular embodiment wherein the second organosilane precursor or pre-catalyst additive is a compound having formula IV, the second organosilane precursor would release amines upon interacting with a protic reagent such as water or water vapor in a flowable chemical vapor deposition reactor and the amines can facilitate condensation reaction with the first organosilane employed in the vapor deposition process to form Si-O-Si network.

Another advantage of the second organosilane precursor or pre-catalyst additive is that it may promote the formation of Si-O-Si via reacting partially hydrolyzed organosilane having Si-OH group with Si-OR or Si-NR⁵R⁶ bond. The second organosilane precursor or pre-catalyst additive is in particular compatible with the bulk hydrolysable or first organosilane precursor if they are pre-mixed where the R¹, R², and R³ substituents both precursors are the same.

Throughout the description, the term "hydrolysable" denotes an organosilane contains a hydrolysable bond selected from a group consisting of Si-H, Si-halogen, Si-O and Si-N bond. The hydrolysable bond can react with a protic reactant to form Si-O-Si linkage in a flowable chemical vapor deposition, thus facilitating the formation of silicon oxide films.

In the formulas above and throughout the description, the term "alkyl" denotes a linear or branched functional group having from 1 to 12, 1 to 10, 3 to 10, or 1 to 6 carbon atoms. Exemplary linear alkyl groups include, but are not limited to, methyl, ethyl, propyl, butyl, pentyl, and hexyl groups. Exemplary branched alkyl groups include, but are not limited to, isopropyl, isobutyl, sec-butyl, tert-butyl, iso-pentyl, tert-pentyl, isohexyl, and neohexyl. In certain embodiments, the alkyl group may have one or more functional groups such as, but not limited to, an alkoxy group, a dialkylamino group or combinations thereof, attached thereto. In other embodiments, the alkyl group does not have one or more functional groups attached thereto. The alkyl group may be saturated or, alternatively, unsaturated.

In the formulas above and throughout the description, the term "cyclic alkyl" denotes a cyclic group having from 3 to 12 or 5 to 10 atoms. Exemplary cyclic alkyl groups include, but are not limited to, cyclobutyl, cyclopentyl, cyclohexyl, and cyclooctyl groups. In certain embodiments, the cyclic alkyl group may have one or more C₁ to C₁₀ linear, branched substituents, or substituents containing oxygen or nitrogen atoms. In this or other embodiments, the cyclic alkyl group may have one or more linear or branched alkyls or alkoxy groups as substituents, such as, for example, a methylcyclohexyl group or a methoxycyclohexyl group

In the formulas above and throughout the description, the term "aryl" denotes an aromatic cyclic functional group having from 3 to 10 carbon atoms, from 5 to 10 carbon atoms, or from 6 to 10 carbon atoms. Exemplary aryl groups include, but are not limited to, phenyl, benzyl, chlorobenzyl, tolyl, and o-xylyl.

In the formulas above and throughout the description, the term "alkenyl group" denotes a group which has one or more carbon-carbon double bonds and has from 2 to 12, from 2 to 10, or from 2 to 6 carbon atoms. Exemplary alkenyl groups include, but are not limited to, vinyl or allyl groups.

The term "alkynyl group" denotes a group which has one or more carbon-carbon triple bonds and has from 2 to 12 or from 2 to 6 carbon atoms.

In the formulas above and throughout the description, the term "alkoxy" denotes an alkyl group which has is linked to an oxygen atom (e.g., R-O) and may have from 1 to 12 or from 1 to 6 carbon atoms. Exemplary alkoxy groups include, but are not limited to, methoxy, ethoxy, propoxy, isopropoxy, butoxy, isobutoxy, sec-butoxy, tert-butoxy, pentoxy, tert-pentoxy, isopentoxy, neo-pentoxy, hexoxy,and 2-ethylhexoxy.

In the formulas above and throughout the description, the term "aryloxy" denotes an aryl group which has is linked to an oxygen atom (e.g., R-O) and may have from 1 to 12 or from 1 to 6 carbon atoms. Exemplary aryloxy groups include, but are not limited to, phenoxy, cresyloxy, 2-methylphenoxy, 3-methylphenoxy, 4-methylphenoxy, xylenoxy, p-hexylphenoxy.

In the formulas above and throughout the description, the term "acyloxy" denotes an acyl group which has is linked to an oxygen atom (e.g., R-O) and may have from 1 to 12 or from 1 to 6 carbon atoms. Exemplary acyloxy groups include, but are not limited to, acetoxy.

In the formulas above and throughout the description, the term "aroyloxy" denotes an aromatic acid radical which has is linked to an oxygen atom (e.g., R-O) and may have from 1 to 12 or from 1 to 6 carbon atoms. Exemplary aroyloxy groups include, but are not limited to, benzoyloxy, and napthoyloxy.

In the formulas above and through the description, the term "unsaturated" as used herein means that the functional group, substituent, ring or bridge has one or more carbon double or triple bonds. An example of an unsaturated ring can be, without limitation, an aromatic ring such as a phenyl ring. The term "saturated" means that the functional group, substituent, ring or bridge does not have one or more double or triple bonds.

In the formulas above and through the description, the term "isocyante group" means -N=C=O group bonded to silicon via a nitrogen atom.

In certain embodiments, one or more of the alkyl group, alkenyl group, alkynyl group, alkoxysilylalkyl group, alkoxy group, aryloxy, aroyloxy, aryl group, and/or aromatic group in the formulas may be "substituted" or have one or more atoms or group of atoms substituted in place of, for example, a hydrogen atom. Exemplary substituents include, but are not limited to, oxygen, sulfur, halogen atoms (e.g., F, Cl, I, or Br), nitrogen, alkyl groups, and phosphorous. In other embodiments, one or more of the alkyl group, alkenyl group, alkynyl group, alkoxyalkyl group, alkoxy group, alkylaminoalkyl group, aromatic and/or aryl group in the formulas may be unsubstituted.

In certain embodiments, substituents R⁵ and R⁶ and/or substitutents R⁷ and R⁸ are linked in the above formula are linked to form a ring structure when R⁵ and R⁷ are not hydrogen. As the skilled person will understand, where R⁵ and R⁶ or R⁷ and R⁸ are linked together to form a ring, R⁵ (or R⁷)will include a bond (instead of a hydrogen substituent) for linking to R⁶ (or R⁸)and vice versa. Thus, in the example above R⁵, and indeed each of R⁶, R⁷ and R⁸, may be independently selected from a linear or branched C₁ to C₁₀ alkylene moiety; a C₂ to C₁₂ alkenylene moiety; a C₂ to C₁₂ alkynylene moiety; a C₄ to C₁₀ cyclic alkyl moiety; and a C₆ to C₁₀ arylene moiety. In these embodiments, the ring structure can be unsaturated such as, for example, a cyclic alkyl ring, or saturated, for example, an aryl ring. Further, in these embodiments, the ring structure can also be substituted or substituted. In other embodiments, substituent R⁵ and R⁶ or substituent R⁷ and R⁸ are not linked.

While the actual pre-catalyst additive or second organosilane precursor is not reactive *per se* with the first organosilane precursor in the absence of protic reactants, when combined with the protic reactant in a deposition process, the second organosilane precursor would react with the protic reactant to generate an acidic (e.g., if it has formula III) or basic environment (e.g., if it has formula IV) in such a way as to provide uniform rate of hydrolysis and condensation of the hydrolysable organosilane precursor that enables it to deposit a condensed and non-volatile film uniformly on the substrate.

When the pre-catalyst additive is delivered as a separate stream or in their active state directly in the deposition process, or when combined with the protic reactant, there may be compositional fluctuations leading to uneven deposition, such as variation of deposition rate, and/or non-uniformity of the deposited film. While it is often possible to simply mix the hydrolysable organosilane precursor with a carefully measured amount of an appropriate pre-catalyst additive, in some cases the desired pre-catalyst additive may not be readily available in pure form or indeed may not be possible to prepare in high purity due to its self-reactivity when at high concentrations. In such cases, we found that it is possible to synthesize a stable pre-catalyst additive directly in the bulk hydrolysable organosilane precursor. Even more advantageous is the case where the bulk hydrolysable organosilane precursor serves as one reagent for the synthesis of the pre-catalyst additive as well as main component for condensation reaction to form silicon-containing film.

There are many possible chemical reactions that could be used to synthesize a suitable pre-catalyst additive in the matrix of a suitable and compatible hydrolysable organosilane precursor.

The following Reaction 1 provides one particular embodiment of the formation of the formulation described herein. Reaction 1 proves to be quite satisfactory when the hydrolysable or first organosilane precursor contains an alkoxy functional group. 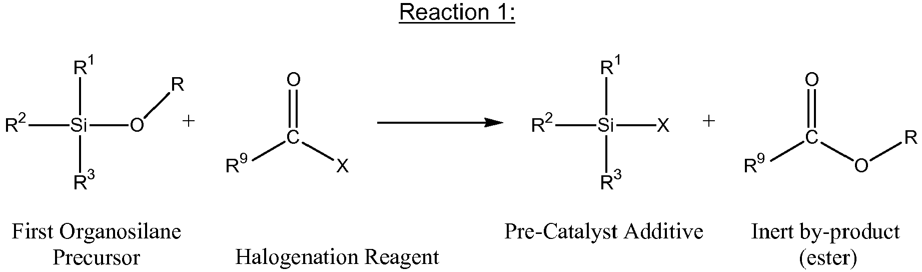 In Reaction 1 above, X is a halogen atom such as F, Cl, Br, I; substituents R¹, R², R³, R⁹ are defined as above; and in Reaction 1 -OR is equivalent to R⁴ in formula I but selected from the group consisting of an alkoxy, an aryloxy, an acyloxy, and an aroyloxy group (illustrated as -OR in Reaction 1). Reaction 1 makes the second organosilane, or pre-catalyst additive halosilane, as well as an inert ester by-product. Since the molar concentration of the inert by-product is small (matching that of the catalytically active species), it may be left in the formulation or, alternatively, may be partially or completely removed by distillation, filtration, evaporation, pervaporation, sparging, adsorption or other separation techniques well know in the chemical processing industry.

Depending on the nature of the hydrolysable first organosilane precursor and the halogenation reagent or acyl halide, Reaction 1 may be slow at room temperature, taking days or even weeks to complete at ambient temperature. The rate of conversion of the hydrolysable first organosilane precursor to the second organosilane precursor may be substantially increased by judicious heating or other means of apply energy, such as ultrasonic vibration, microwave , ultraviolet, infrared or visible radiation and mechanical agitation. In certain instances, addition of small traces of water to the formulation can significantly enhance the reaction rate, presumably by creating small traces of catalytically active species such as, without limitation, hydrohalic acid in the formulation.

While the unreacted halogenation reagent or acyl halide itself may act like a catalyst towards the reaction of the first organosilane precursor with a protic reagent, it would not be the most desired pre-catalyst additive *per se* in this system, since its concentration would continually be changing as it converted to the second organosilane precursor. Nevertheless, formulations of halogenation reagent or acyl halide and the first organosilane precursor may be made directly in the storage and delivery vessels and then either heated or allowed to remain at ambient temperature until a substantial conversion of the halogenation reagent or acyl halide has been achieved.

When the second organosilane precursor is exposed to a protic reagent such as water, it is subject to hydrolysis. In the case where the second organosilane precursor is a halosilane (i.e., a compound with at least one Si-halogen (Si-X) bond, where X = F, Cl, Br or I), the product of this hydrolysis includes a hydrogen halide (HX) as shown in Reaction 2 below.

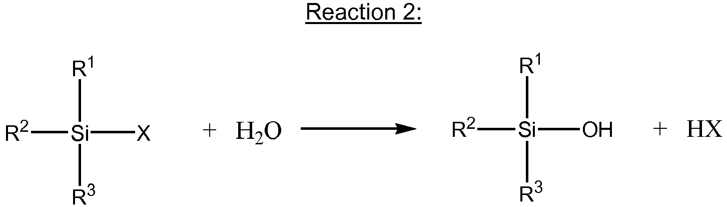

When HX is exposed to a protic reagent such as a water containing formulation, it can at least partially dissociate to form free (or solvated) halide ions and free (or solvated) protons (e.g. hydronium ions) as shown below, and make the mixture more acidic (lower pH) such as that shown below:

HX + H₂O → H₃O⁺ + X⁻ (ionization)

In case of the second organsilane is an aminosilane (i.e., a compound having the formula IV and comprises at least one Si-NR⁵R⁶ bond, where R⁵ and R⁶ are defined above), the product of this hydrolysis includes a free amine (HNR⁵R⁶) as shown below in Reaction 3 below.

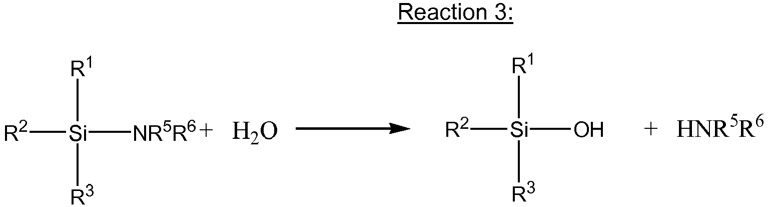

When amines are placed in aqueous mixtures, they would at least partially ionize to form ammonium ions (H₂NR⁵R⁶) and hydroxide ions as shown below to make the mixture more basic (higher pH):

HNR⁴R⁵ + H₂O → [H₂NR⁴R⁵]⁺ + [OH]⁻ (ionization)

Mixtures containing a halosilane as the second precursor may be made with amine substituted catalytically active species by treating the hydrolysable first organosilane precursor with ammonia or primary or secondary amines.

The formulations or reactions described above may be carried out directly in the storage and delivery vessel used to supply the formulations for the deposition process. Alternatively, these formulations may be produced in a bulk vessel, ideally under a dry, inert gas atmosphere. The bulk vessel may optionally be stirred and/or temperature controlled.

In one embodiment of the formulation described herein, the formulation is made via dynamic blending where a first flowing stream comprising a first organosilane precursor is combined with a second flowing stream (at equal or lower mass rate of the first flowing stream) of the halogenation reagent wherein at least a portion or all of the halogenation reagent within the second flowing stream reacts with at least a portion of the first organosilane precursor within the second flowing stream to provide a product stream comprising the second organosilane precursor and an inert by-product. The inert by-product may remain in the product stream or alternatively be removed via a distillation process or other means. The product stream may be directed into a mixing tank, a holding tank, a heated reactor or directly into a storage and delivery vessel used to transport the formulation described herein to a deposition system.

With regard to the later embodiment related to a storage and delivery vessel, the formulations containing one or more of the components comprised therein may be stored, transported and delivered in glass, plastic, or metallic containers or other suitable containers known in the art, such as the containers disclosed in the following US Patents Nos.: 4,828,131; 6,077,356; 6,526,824; 7,124,913; and 7,261,118, all of which are herein incorporated by reference in their entirety.

Plastic or glass lined metallic vessels or containers may also be used. Preferably, the material is stored and delivered from a hermetically sealed high purity stainless steel or nickel alloy vessel. Most preferably, the material is stored and delivered from a hermetically sealed high purity stainless steel or nickel alloy vessel equipped with a down tube and an outlet in communication with the vapor space of the vessel; allowing the product to be delivered either as a liquid from the downtube or as a vapor from the outlet connection in communication with the vapor phase. In the latter case, the down-tube may be optionally used to introduce a carrier gas into the vessel to promote the vaporization of the mixture. In this embodiment, the downtube and vapor outlet connections are equipped with high integrity packless valves. While delivery of the liquid is preferred to avoid partitioning of the components of this formulation described herein, it should be noted that the formulations of the present invention match the vapor pressure of the components closely enough to enable the formulation to be delivered as a vapor mixture. Stainless steel may preferably be chosen from UNS alloy numbers S31600, S31603, S30400, S30403, S31700, S31703, S31500, S31803, S32750, and S31254. Nickel alloys may preferably be chosen from UNS alloy numbers N06625, N10665, N06022, N10276, and N06007. Most preferably, the vessels are made from alloys S31603 or N06022, either uncoated, internally electropolished or internally coated with a fluoropolymer.

The formulations described herein can be used as the main deposition precursor in a process to deposit a dielectric film by using techniques known in the art. As previously mentioned, the second organosilane precursor when reacting with a protic reactant forms an ionizable species capable of forming either an acidic or basic environment. Examples of protic reactants include but not limited to, water, water vapor, hydrogen peroxide, alcohol, primary or secondary amines. The formulations can be pre-mixed mixtures, or premixtures (mixed before being used in the deposition process), or in-situ mixtures (mixed during the deposition process). Thus, in this disclosure the terms "mixture" and "formulation" are interchangeable.

The formulations described herein can be used to provide a rapid and uniform deposition of a flowable silicon oxide film. The formulation described herein may be used with another reactant containing water and optional co-solvents, surfactants and other additives and deposited onto a substrate. Distribution or delivery of this reaction formulation may be achieved by direct liquid injection, spraying, dipping, co-condensation or centrifugal spin-coating. The formulation is then allowed to react until a solid film or body is obtained. The use of inert gas, vacuum, heat or external energy source (light, heat, plasma, e-beam, etc.) to remove unreacted volatile species, including solvents and unreacted water may follow to facilitate the condensation of the film. The formulations of the present invention may preferably be delivered to a substrate contained in a deposition chamber as a process fluid such as without limitation, a gas phase, liquid droplets, mist, fog, aerosol, sublimed solid, or combination thereof with water and optionally co-solvents and other additives also added as a process fluid such as a gas, vapor, aerosol, mist, or combination thereof. Preferably, the formulation of the present invention condenses or dissolves into a condensed film on the surface of the substrate, which may advantageously be held at a temperature below that of the walls of the chamber. The co-mixed deposition precursor and catalyst of the present invention can react at a uniform rate on the surface of the substrate rendering the reaction products into a non-volatile film. Unreacted precursors, water and optional co-solvents and additives may then be removed by gas purge, vacuum, heating, addition of external radiation (light, plasma, electron beam, etc.) until a stable solid silicon-containing film is obtained.

One advantage of the formulations described herein is that the catalyst compounds, i.e. the second organosilane precursor having either formula III or formula IV, and the first organosilane having Formula I, are mutually compatible (e.g., are freely miscible and do not react with each other to generate other impurities). This advantage allows these formulations to be stored for an extended period without any compositional changes which can adversely affect the performance of the formulation. Preferably, these formulations have a usable shelf-life of 1 year or greater or 2 years or greater. The use of a formulation, wherein a component forms a pre-catalyst additive such as the second organosilane precursor in situ, as distinct from co-delivering the catalyst and silicon-containing or deposition precursors separately (thus forming an in-situ mixture), is that the former promotes uniform deposition, since adding the catalyst as a separate stream can lead to non-uniform catalyst distribution, may be variable over time, and/or adds complexity and cost to the deposition process.

In one particular embodiment, the deposition of a dielectric film such as a silicon oxide film, is performed by placing a substrate in a chamber and then introducing into that chamber a formulation comprising the hydrolysable first organosilane precursor and the halogenation reagent wherein at least a portion or all of the halogenation reagent reacts with the first organosilane precursor to provide the second organosilane precursor which is also referred to as the pre-catalyst additive and, in a separate stream, a protic reactant; thereby exposing the substrate to the resulting product or process gas formulation. Depositing a film from the reaction of the product or process gas formulation on the substrate. The resulting films may optionally be exposed to conditions to cure the deposited film by further reaction and/or by removal of unreacted components or byproducts of the reaction.

### Working Examples

### Example 1.

A formulation of 1 part (25% by weight) of a halogenation reagent acetyl chloride (CH₃C(O)Cl) with 3 parts (75% by weight) of the first organosilane precursor or triethoxysilane (EtO)₃SiH was prepared. The formulation was heated to 110°C for 90 h at which time, >98% of the acetyl chloride was converted forming an end product formulation containing an inert by-product (ethyl acetate) and the second organosilane precursor chlorodiethoxysilane ((EtO)₂SiHCl). This end product formulation contained approximately 56% by weight of the first organosilane precursor triethoxysilane, 17% by weight of the inert by-product ethyl acetate and 23% by weight of the second organosilane precursor chlorodiethoxysilane. Such a formulation proved to be stable when stored at ambient temperature for 50 days.

### Example 2.

The formulation prepared from Example 1 was combined with additional amounts of the first organosilane precursor or pure triethoxysilane in two stages of serial dilution such that the final concentration of the second organosilane precursor or chlorodiethoxysilane contained therein was 0.025% by weight. This formulation was stable. This example shows that the concentration of the formulation can be adjusted depending upon the end use.

In this Example, the formulation was used to deposit a flowable silicon oxide film with a rapid and uniform deposition by the method described above. A film greater than 100 nm in thickness could grow in 1 minute using this exemplary formulation.

### Comparative Example 3.

The flowable oxide film deposition was conducted under conditions identical to those in Example 2 except with a formulation containing pure triethoxysilane or the first organosilane precursor and no second organosilane precursor or chlorodiethoxy silane. The comparative formulation had a substantially longer induction delay before deposition commenced and generally took longer to reach the same deposit thickness. In this regard, under the same deposition conditions of Example 2, <10 nm of deposit was formed in 1 minute whereas in Example 1 a film greater than 100 nm in thickness was grown. Comparing the two examples, the presence of the second organosilane precursor increased the film formation rate approximately 10 fold.

### Example 4.

In a 500 ml round bottom flask equipped with a magnetic stirring bar, 270.4 g (1.0 mol) 1,1,1,4,4,4-hexamethoxy-1,4-disilabutane as the first organosilane precursor and 7.85 g (0.1 mol) acetyl chloride as the halogenations reagent were added. The formulation was stirred at room temperature for 72 hours. GC-MS showed the generation of a second organosilane precursor 1-chloro-1,1,4,4,4-pentamethoxy-1,4-disilabutane and the inert by-product methyl acetate, and the disappearance of the halogenation reagent acetic chloride. The inert by-product methyl acetate was removed by distillation. 1,1,1,4,4,4-hexamethoxy-1,4-disilabutane and 1-chloro-1,1,4,4,4-pentamethoxy-1,4-disilabutane have very closed boiling points at 104 C /5 mm Hg. Therefore, they were distilled out as one fraction which remained 9:1 molar ratio. The composition of this formulation remained unchanged upon storage at room temperature for 6 months

### Example 5.

The formulation prepared from Example 4 was combined with pure 1,1,1,4,4,4-hexamethoxy-1,4-disilabutane in dilution such that the final concentration of second organosilane precursor 1-chloro-1,1,4,4,4-pentamethoxy-1,4-disilabutane in formulation was in the range of 1000 ppm to 5000 ppm. This formulation was stable.

### Example 6.

The purpose of this example was to show the benefits of using an in situ formed catalyst or second organosilane precursor. A flowable oxide deposition as described above was undertaken using just methyltriethoxysilane MeSi(OEt)₃ as the first organosilane precursor. No film deposition could be obtained.

When methyltriethoxysilane MeSi(OEt)₃, as the silicon-containing precursor, was combined with formic acid and water (water being the protic reactant and the acid being the active catalyst), a film could be formed. However, a visual observation showed that the film was clearly non-uniform.

When a formulation containing 2.5% by weight of the second organosilane precursor methyldiethoxychlorosilane (MeSiClOEt)₂) and the balance first organosilane precursor methyltriethoxysilane was used, a uniform deposit was obtained. The uniform deposit can be further processed by exposure to reactive atmospheres or external sources of energy. Examples include exposure to any combination of heat, oxygen containing plasmas, hydrogen containing plasmas, argon plasmas, nitrogen plasmas, ultraviolet radiation, infrared radiation, electron beams, ozone, water vapor, nitrogen and helium.

The working example and embodiments of this invention listed above, are exemplary of numerous embodiments that may be made of this invention. It is contemplated that numerous materials other than those specifically disclosed may be made. Numerous other configurations of the process may also be used, and the materials used in the process may be elected from numerous materials other than those specifically disclosed.

## Claims

1. A formulation comprising:
(a) a first organosilane precursor having a formula I comprising:
I. R¹R²R³R⁴Si
wherein R¹, R², R³, and R⁴ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; an amino group having the formula NR⁵R⁶ wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring; and an alkoxysilylalkyl group having a formula selected from the group consisting of -CH₂Si(OR⁷)ₙR⁸₃₋ₙ and -CH₂CH₂Si(OR⁷) ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3; and
wherein the first organosilane precursor contains at least two hydrolysable bonds independently selected from the group consisting of Si-H, Si-halogen, Si-O and Si-N bond;
(b) optionally a halogenation reagent having a formula II comprising:
II. R⁹C(O)X
wherein X is a halogen atom and R⁹ is selected from the group consisting of a hydrogen atom; a C₁-C₁₂ linear or branched alkyl group, optionally with one or more halogen atom substituents; a C₃-C₁₂ aryl group; a C₃-C₁₂ cycloalkyl group; a C₁-C₁₂ linear or branched acyl group; a C₅-C₁₂ aroyl group; and a C₁-C₁₂ linear or branched acyl halide group;
(c) a second organosilane precursor selected from the group consisting of:
(1) a compound having a formula III comprising:
III. XSiR¹R²R³
wherein X is a halogen atom selected from the group consisting of F, Cl, Br, and I; and R¹, R², and R³ are each independently selected from a hydrogen atom; a halogen atom; a C₁-C₁₂ linear or branched alkyl group; a C₂-C₁₂ alkenyl group; a C₂-C₁₂ alkynyl group; a C₃-C₁₂ aryl group; a C₃-C₁₂ cycloalkyl group; a C₁-C₁₂ alkoxy group; a C₅-C₁₂ aryloxy group; a C₁ to C₁₂ acyloxy group; a C₅ to C₁₂ aroyloxy; an isocyanato group; and an alkoxysilylalkyl group having a formula selected from the group consisting of -CH₂Si(OR⁷)ₙR⁸₃₋ₙ and -CH₂CH₂Si(OR⁷) ₙR⁸ ₃₋ₙ wherein R⁷ and R⁸ are independently chosen from: a hydrogen atom, a C₁-C₆ a linear or branched alkyl group, a C₃ to C₁₂ cycloalkyl group, and a C₃ to C₁₂ aryl group wherein R⁷ and R⁸ are connected to form a ring or R⁷ and R⁸ are not connected to form a ring and wherein in the alkoxysilylalkyl group n is a number ranging from 0 to 3 and wherein at least one of substituents R¹, R², and R³ within the second organosilane precursor forms a Si-H, Si-halogen, Si-O or Si-N bond; and
(2) a compound having a formula IV comprising:
IV. (R⁵R⁶N)ₙSiH₄₋ₙ
wherein R⁵ and R⁶ are independently selected from: a hydrogen atom; a C₁-C₆ linear or branched alkyl group; a C₃ to C₁₂ cycloalkyl group; and a C₃-C₁₂ aryl group wherein R⁵ and R⁶ are connected to form a ring or R⁵ and R⁶ are not connected to form a ring and n= 1, 2, 3, or 4.

2. The formulation of Claim 1, wherein at least a portion or all of the halogenation reagent reacts with the first organosilane precursor to provide the second organosilane precursor.

3. The formulation of Claim 1 or 2, wherein R⁴ is selected from an alkoxy group or an aryloxy group.

4. The formulation of Claim 1 or 2, wherein R⁴ is an amino group having the formula -NR⁵R⁶_{.}

5. The formulation of Claim 1 or 2, wherein the first organosilane is selected from the group consisting of: methyltrimethoxysilane, methyltriethoxysilane, triethoxysilane, tetraethoxysilane, hexyltrimethoxysilane, isobutyltrimethoxysilane, isobutyltriethoxysilane, hexyltriethoxysilane, tert-butyltrimethoxysilane, tert-butyltriethoxysilane, ethyltrimethoxysilane, ethyltriethoxysilane, 1,1,1,4,4,4-hexamethoxy-1,4-disilabutane, 1-methyl-1,1,4,4,4-pentamethoxy-1,4-disilabutane, 1,1,1,4,4,4-hexaethoxy-1,4-disilabutane, 1-methyl-1,1,4,4,4-pentaethoxy-1,4-disilabutane, 1,1,1,3,3,3-hexamethoxy-1,3-disilapropane, 1-methyl-1,1,3,3,3-pentamethoxy-1,3-disilapropane, 1,1,1,3,3,3-hexaethoxy-1,3-disilapropane, 1-methyl-1,1,3,3,3-pentaethoxy-1,3-disilapropane, and combinations thereof.

6. The formulation of any preceding claim, wherein the halogenation reagent is a acyl halide selected from the group consisting of: acetyl chloride, acetyl bromide, oxalyl chloride, pivaloyl chloride, propionyl chloride, propionyl bromide, benzoyl chloride, benzoyl bromide, benzoyl fluoride, acetyl fluoride, acetyl iodide, malonyl chloride, chlorobutyryl chloride, formyl chloride, formyl fluoride, polymer-bound benzoyl chloride, and combinations thereof.

7. The formulation of Claim 1 or 2, wherein the first organosilane precursor is triethoxysilane; the halogenation reagent is acetyl chloride (CH₃C(O)Cl; and the second organosilane precursor is chlorodiethoxysilane.

8. The formulation of any preceding claim further comprising a catalytic active species selected from the group consisting of HCl, HBr, HF, HI, sulfonic acids, amines, imines, and combinations thereof.

9. The formulation of any preceding claim further comprising an inert by-product.

10. The formulation of Claim 9, wherein the inert by-product is selected from the group consisting of ester and amide.

11. A system comprising a vessel containing a formulation according to any one of Claims 1 to 10.

12. The system of Claim 11, wherein energy is applied to the vessel; wherein the energy is selected from the group consisting of heat, ultrasonic vibration, microwave , ultraviolet, infrared or visible radiation, mechanical agitation, and combinations thereof.

13. A method of depositing a condensed flowable silicon containing film on a substrate comprising steps of:
providing a substrate in a reactor;
introducing into the reactor a formulation according to any one of Claims 1 to 10;
introducing a protic reactant;
and
exposing the substrate to the formulation and the protic reactant to form the condensed flowable silicon containing film on the substrate.

14. The method of Claim 13, wherein the protic reactant is selected from the group consisting of water, water vapor, hydrogen peroxide, alcohol, primary, secondary amines and combinations thereof.

15. The method of Claim 13 or 14, wherein the condensed flowable silicon containing film is treated by energy selected from the group consisting of heat, oxygen containing plasmas, hydrogen containing plasmas, argon plasmas, nitrogen plasmas, ultraviolet radiation, infrared radiation, electron beams, ozone, water vapor, nitrogen, helium and combinations thereof.
